# EUROPÄISCHE PATENTSCHRIFT

(11) **EP 2 228 526 B1**
(45) Veröffentlichungstag und Bekanntmachung des Hinweises auf die Patenterteilung: **24.08.2016**
(21) Anmeldenummer: 10155866.6
(22) Anmeldetag: 09.03.2010
(51) Int. Cl.: F02D 19/02, F02D 41/22, F02D 41/00

(54) **Fahrzeug, insbesondere Flurförderzeug, mit Gasverbrennungsmotor**
Vehicle, especially industrial truck, with gas combustion engine
Véhicule, notamment chariot de manutention, doté d'un moteur à combustion de gaz

(30) Priorität: 12.03.2009 DE 102009012915
(43) Veröffentlichungstag der Anmeldung: 15.09.2010
(73) Patentinhaber: Jungheinrich Aktiengesellschaft, 22047 Hamburg (DE)
(72) Erfinder: Kronthaler, Peter, 85413, Hörgertshausen (DE)
(74) Vertreter: Weickmann & Weickmann PartmbB

(56) Entgegenhaltungen:
- EP-A1- 0 104 278
- EP-A2- 1 455 077
- DE-A1- 2 364 555
- DE-A1- 3 223 510

## Beschreibung

Die vorliegende Erfindung betrifft ein Fahrzeug, insbesondere Flurförderzeug mit einem Gasverbrennungsmotor, welcher über eine Zufuhrleitung mit einem am Fahrzeug mitgeführten Gastank verbunden ist, mit einer Steuereinrichtung mit einem Ein-/Ausschalter zum regulären Ein- bzw. Ausschalten des Betriebs des Verbrennungsmotors, wobei die Steuereinrichtung dazu eingerichtet ist, den Motorbetrieb zu überwachen, und mit einem in der Zufuhrleitung vorgesehenen, mittels der Steuereinrichtung steuerbaren Absperrventil zur bedarfsweisen Unterbrechung der Gaszufuhr vom Gastank zum Verbrennungsmotor. Dabei ist die Steuereinrichtung dazu eingerichtet, das Absperrventil in den Schließzustand übergehen zu lassen und den Motorbetrieb aufrechtzuerhalten bis zum regulären Motorstillstand aufgrund von Gasmangel, wenn der Ein-/Ausschalter bei laufendem Verbrennungsmotor in die Ausschaltstellung geschaltet wird. Ein Beispiel für einen solchen regulären Motorstillstand offenbart auch die Europäische Patentanmeldung EP1455077.

Derartige Fahrzeuge, insbesondere Flurförderzeuge, sind aus dem Stand der Technik bekannt. Als Gas zum Antreiben des Verbrennungsmotors wird beispielsweise Butan oder Propan verwendet, wobei Gas derzeit kostengünstiger ist als andere Treibstoffe, wie etwa Benzin oder Diesel. Allerdings besteht bei Fahrzeugen mit Gasverbrennungsmotor das Problem, dass mit Gas befüllte Leitungen bei Temperaturschwankungen großen Druckschwankungen ausgesetzt sind, da das Gas in den Leitungen aufgrund von Erwärmung expandiert. Tritt eine starke Erwärmung einer solchen gasgefüllten Leitung auf, beispielsweise durch Abwärme eines stillstehenden Motors nach längerem Betrieb des Flurförderzeugs, besteht das Problem, dass aufgrund der Gasausdehnung und somit erhöhtem Druck Leitungskomponenten, insbesondere Übergänge zwischen Leitungen und Ventilen oder dgl., beschädigt werden können, was zu einem Austritt von Gas führen kann.

Aus diesem Grund ist in der Zufuhrleitung zwischen dem Gastank und dem Verbrennungsmotor ein Absperrventil vorgesehen, das geschlossen wird, wenn der Ein-/Ausschalter zum regulären Ein- bzw. Ausschalten des Betriebs des Verbrennungsmotors bei laufendem Verbrennungsmotor (regulärer Motorbetrieb) in die Ausschaltstellung geschaltet wird. Nach Schließen des Absperrventils wird der Motorbetrieb so lange aufrechterhalten, bis der Zufuhrleitungsabschnitt zwischen Absperrventil und Verbrennungsmotor leer ist, d. h. kein oder nur noch sehr wenig Gas darin enthalten ist. Der Motorstillstand tritt dann regulär aufgrund des Gasmangels in dem Zufuhrleitungsabschnitt vom Absperrventil zum Verbrennungsmotor ein.

Wird allerdings der Motorbetrieb irregulär beendet, beispielsweise durch Abwürgen des Verbrennungsmotors, kann das in der Zufuhrleitung noch vorhandene Gas nicht mehr durch den Motorbetrieb verbrannt werden und die Zufuhrleitung ist bei irregulärem Stillstand des Motors mit Gas gefüllt. Wird das Fahrzeug bzw. Flurförderzeug in diesem Zustand stehen gelassen, kann die oben erwähnte Erwärmung der Gasleitung und somit die Ausdehnung des darin enthaltenen Gases auftreten, verbunden mit den oben beschriebenen Gefahren.

Aufgabe der Erfindung ist es, ein Fahrzeug mit Gasverbrennungsmotor bereitzustellen, das auch bei irregulärem Motorstillstand eine hohe Betriebssicherheit bietet.

Diese Aufgabe wird dadurch gelöst, dass bei einem gattungsgemäßen Flurförderzeug die Steuereinrichtung ferner dazu eingerichtet ist, das Absperrventil in den Schließzustand übergehen zu lassen und eine am Fahrzeug angeordnete Warneinrichtung zur Signalisierung eines irregulären Betriebszustands zu aktivieren, wenn ein irregulärer Motorstillstand auftritt bei in Einschaltstellung befindlichem Ein-/Ausschalter.

Durch eine derartige Maßnahme wird die Bedienperson des Fahrzeugs nach Auftreten eines irregulären Motorstillstands, beispielsweise durch Abwürgen des Motors, unmittelbar darauf hingewiesen mittels der Warneinrichtung, dass ein irregulärer Betriebszustand aufgetreten ist, nämlich dass der Motor nicht über das Entleeren des Leitungsabschnitts zwischen geschlossenem Absperrventil und Verbrennungsmotor regulär in den Stillstand überführt worden ist, sondern dass dieser Leitungsabschnitt noch mit Gas gefüllt ist.

Vorzugsweise ist dabei die Warneinrichtung so ausgebildet, dass sie im aktivierten Zustand optische oder/und akustische Signale abgibt. Es wird insbesondere daran gedacht, dass die Warneinrichtung als Leuchtelement, beispielsweise Leuchtdiode, Lämpchen oder dgl. ausgeführt ist, die im Sichtfeld der Bedienperson, beispielsweise am Armaturenbrett des Fahrzeugs, angebracht ist. Ferner kann alternativ oder zusätzlich ein Summer oder eine Hupe vorgesehen sein, welche im Falle des irregulären Motorstillstands aktiviert wird. Denkbar ist es auch, dass eine optische und eine akustische Warneinrichtung zeitverzögert aktiviert werden, so dass beispielsweise zuerst die optische Warneinrichtung aktiviert wird und erst nach einer vorbestimmten Zeitdauer, beispielsweise wenigen Minuten, die akustische Warneinrichtung aktiviert wird, wenn der irreguläre Betriebszustand nicht durch die Bedienperson in einen regulären Betriebszustand überführt worden ist. Zur Wiederherstellung eines regulären Betriebszustands ist es in einem solchen Falle erforderlich, dass der Motor durch Umschalten des Ein-/Ausschalters von der Einschaltstellung zurück in die Ausschaltstellung und erneut in die Einschaltstellung gestartet wird. Anschließend kann dann der Motor regulär in den Stillstand überführt werden durch Ausschalten am Ein-/Ausschalter, so dass die angesprochene Entleerung der Gaszufuhrleitung erfolgen kann.

Vorzugsweise weist das Fahrzeug eine Zündeinrichtung mit einem mit dem Verbrennungsmotor verbundenen Zündverteiler und einer Zündspule auf, wobei die Zündeinrichtung dafür eingerichtet ist, vom Zündverteiler stammende elektrische Pulse an die Steuereinrichtung abzugeben.

Ferner wird vorgeschlagen, dass die Steuereinrichtung dazu eingerichtet ist, das Vorliegen von elektrischen Pulsen zu überwachen und ein Ausbleiben von wenigstens einem elektrischen Puls, vorzugsweise von mehreren aufeinander folgenden Pulsen, als Motorstillstand zu erkennen.

Um den weiteren Motorbetrieb bei regulärem Ausschalten des Motors gewährleisten zu können, wird vorgeschlagen, dass die Steuereinrichtung dazu eingerichtet ist, die Zündeinrichtung beim regulären Unterbrechen des Motorbetriebs so lange mit Strom zu versorgen, bis der reguläre Motorstillstand aufgrund von Gasmangel eintritt.

Ferner ist es bevorzugt, dass die Steuereinrichtung dazu eingerichtet ist, die Zündeinrichtung beim irregulären Motorstillstand stromlos zu schalten, wobei dieses Stromlosschalten im Wesentlichen unmittelbar nach dem Erkennen des irregulären Motorstillstands erfolgt. Alternativ kann die Zündeinrichtung auch bestromt bleiben.

Die der Erfindung zugrunde liegende Aufgabe wird ferner durch ein Verfahren zur Steuerung des Motorbetriebs eines Gasverbrennungsmotors eines Fahrzeugs, insbesondere Flurförderzeugs gelöst, das die folgenden Schritte umfasst:
- Einschalten des Motorbetriebs durch Schalten eines Ein-/Ausschalters einer Steuereinrichtung in eine Einschaltstellung, wobei durch die Steuereinrichtung das Öffnen eines Absperrventils in einer Zufuhrleitung, die sich von einem mitgeführten Gastank zum Verbrennungsmotor erstreckt, und das Bestromen einer Zündeinrichtung veranlasst wird,
- Überwachen des Motorbetriebs durch die Steuereinrichtung,
- Schließen des Absperrventils und Aktivieren einer optischen oder/und akustischen Warneinrichtung, wenn der Motorbetrieb irregulär unterbrochen wird bei in Einschaltstellung befindlichem Ein-/Ausschalter.

Vorzugsweise umfasst das Verfahren ferner den Schritt, dass die Stromversorgung der Zündeinrichtung unterbrochen wird, wenn der Motorbetrieb irregulär unterbrochen wird bei in Einschaltstellung befindlichem Ein-/Ausschalter.

Schließlich wird vorgeschlagen, dass die Warneinrichtung erst dann deaktiviert wird, wenn der Motorbetrieb durch erneutes Öffnen des Absperrventils und durch Bestromen der Zündeinrichtung wieder aufgenommen wird, wobei vorzugsweise zuerst der Ein-/Ausschalter von der Einschaltstellung in die Ausschaltstellung bewegt wird und danach die oben erwähnten Schritte des Einschaltens und des Überwachens des Motorbetriebs erneut durchgeführt werden. Das heißt, dass die Warneinrichtung dann wieder ausgeschaltet bzw. deaktiviert werden kann, wenn der normale Motorbetrieb wieder aufgenommen worden ist, da im regulären Motorbetrieb das Gas kontinuierlich vom Gastank zum Verbrennungsmotor strömt und dort verbrannt wird und somit keine Gefahr der Gasausdehnung in einem abgesperrten Leitungsabschnitt auftreten kann.

Die Erfindung wird nachfolgend anhand einer beispielhaften und nicht einschränkenden Ausführungsform unter Bezugnahme auf die anliegenden Figuren beschrieben.
- Fig. 1: ist ein schematisches Schaltbild einer Motorsteuerung für ein gasbetriebenes Fahrzeug.
- Fig. 2: ist ein Ablaufdiagramm des Betriebs des Fahrzeugs bei regulärem Motorbetrieb.
- Fig. 3: ist ein Ablaufprogramm des Betriebs des Flurförderzeugs, wenn ein irregulärer Betriebszustand durch irregulären Motorstillstand, beispielsweise Abwürgen des Motors, auftritt.

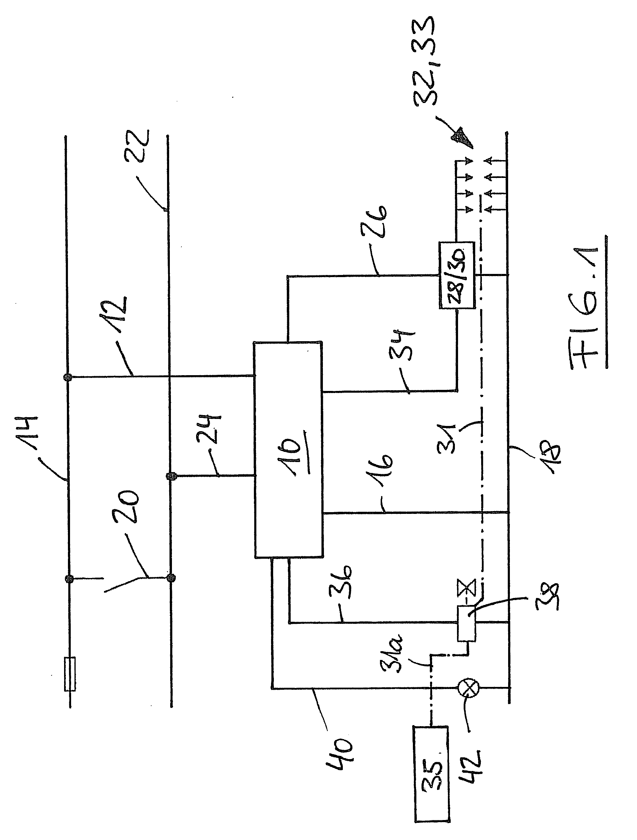

Aus dem in der Fig. 1 dargestellten schematischen Schaltbild ist eine Steuereinrichtung 10 ersichtlich, welche über eine Leitung 12 mit einer unter Betriebsspannung des Flurförderzeugs stehenden Leitung 14 verbunden ist.

Die Steuereinrichtung 10 ist somit dauernd mit Strom versorgt. Über eine Leitung 16 ist die Steuereinrichtung 10 mit dem Bezugspotential (Erde) 18 verbunden. Über einen Ein-/Ausschalter 20 kann eine Leitung 22 auf die Betriebsspannung des Flurförderzeugs gesetzt werden bei geschlossenem Ein-/Ausschalter 20. Mit dieser Leitung 22 sind elektrische Komponenten des Flurförderzeugs verbunden, die beim Einschalten des Flurförderzeugs unter Spannung gesetzt werden sollen. Die dauernd mit Strom versorgte Steuereinrichtung 10 ist über eine weitere Leitung 24 mit der Leitung 22 verbunden, und aufgrund dieser Verbindungsleitung 24 kann mittels der Steuereinrichtung 10 festgestellt werden, ob der Ein-/Ausschalter 20 geöffnet oder geschlossen ist. Über eine weitere Leitung 26 versorgt die Steuereinrichtung 10 eine zu einer Zündeinrichtung gehörende Zündspule 28 und einen Zündverteiler 30 mit Strom. Die Zündspule 28 erzeugt eine Hochspannung für den Zündverteiler 30, der, falls er aktiv ist, Zündpulse an Zündkerzen 32 abgibt. Der Zündverteiler 30 ist mechanisch mit dem Verbrennungsmotor 33 verbunden und gibt über die Leitung 34 elektrische Pulse an die Steuereinrichtung 10 ab, wenn sich die Kurbelwelle des Motors dreht, so dass die Steuereinrichtung 10 den Motorbetrieb überwachen kann. Über eine weitere Leitung 36 kann die Steuereinrichtung 10 ein Absperrventil 38 ansteuern, und über eine Leitung 40 kann eine Warneinrichtung 42 mittels der Steuereinrichtung 10 aktiviert bzw. deaktiviert werden.

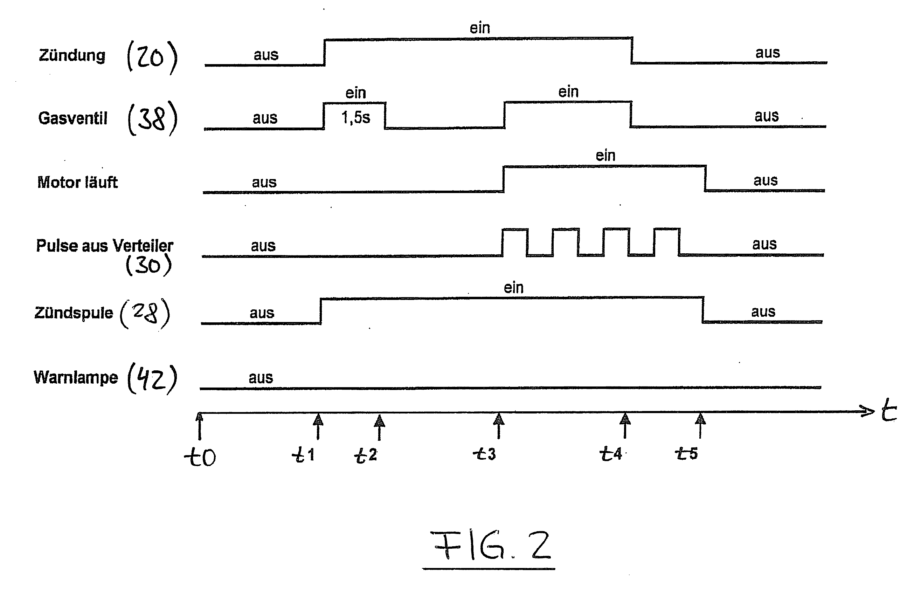

Fig. 2 zeigt ein Ablaufdiagramm des Betriebs des Flurförderzeugs mittels der Steuereinrichtung 10. Aus dem Diagramm ist ersichtlich, zu welchen Zeitpunkten verschiedene Komponenten des Flurförderzeugs aktiviert ("ein") bzw. deaktiviert ("aus") sind. Der zeitliche Verlauf ist durch den Zeitstrahl t angedeutet. Zu Beginn (Zeitpunkt t0) ist das Fahrzeug bzw. Flurförderzeug vollständig deaktiviert. Bei t1 wird der Ein-/Ausschalter 20 in die Einschaltstellung geschaltet, was dazu führt, dass die Stromversorgung über die Leitung 22 aktiviert wird. Über die Leitung 24 erkennt dann die Steuereinrichtung 10, dass der Ein-/Ausschalter 20 geschlossen wurde, und veranlasst über die Leitung 36, dass das Gasventil 38 für einen kurzen Zeitraum, im vorliegenden Beispiel etwa 1,5 Sekunden, geöffnet wird, um eine Zufuhrleitung 31 (strichpunktiert dargestellt) vom Absperrventil 38 bis zum Verbrennungsmotor 33 mit Gas zu befüllen. Wie bereits einleitend erwähnt, befindet sich das Gasabsperrventil 38 in der Zufuhrleitung 31 von einem Gastank 35 zum Verbrennungsmotor 33 des Fahrzeugs, wobei es bevorzugt ist, dass das Absperrventil 38 möglichst nahe beim Gastank 35 angeordnet ist, so dass zwischen Gastank 35 und Absperrventil 38 kein langer Leitungsabschnitt 31 a vorhanden ist.

Nach dem Schließen des Gasventils 38 zum Zeitpunkt t2 folgt zum Zeitpunkt t3 das Aufnehmen des Motorbetriebs, indem der Motor durch einen Anlasser gestartet wird. Der mechanisch mit dem Motor, insbesondere dessen Kurbelwelle verbundene Zündverteiler 30 gibt ab dem Zeitpunkt t3 elektrische Pulse ab, die von der Steuereinrichtung 10 über die Leitung 34 empfangen werden. Wenn die Steuereinrichtung 10 erkennt, dass Pulse auf dem Zündverteiler 30 vorliegen, öffnet sie das Absperrventil 38 erneut, wobei dies ebenfalls etwa zum Zeitpunkt t3 bzw. nur sehr kurz danach passiert. Der Motor läuft nun in einem regulären Motorbetrieb.

Zum Zeitpunkt t4 wird der Ein-/Ausschalter 20 in die Ausschaltstellung umgeschaltet. Die Steuereinrichtung 10 schließt dann unmittelbar das Absperrventil 38, versorgt aber die Zündspule 28 mit dem Zündverteiler 30 weiter mit Strom. Dadurch wird der Motorbetrieb so lange aufrechterhalten, bis der Verbrennungsmotor noch vorhandenes Gas im durch das Absperrventil 38 abgetrennten Zufuhrleitungsabschnitt aufgebraucht hat und zum Zeitpunkt t5 regulär stillsteht aufgrund des aufgetretenen Gasmangels. Zu diesem Zeitpunkt bleiben dann auch elektrische Pulse vom Zündverteiler 30 aus, was durch die Steuereinrichtung 10 erkannt wird, so dass sie anschließend die Stromversorgung der Zündspule 28 und des Zündverteilers 30 unterbrechen kann. Der Motorbetrieb des Flurförderzeugs ist nun regulär unterbrochen bzw. eingestellt und die Zufuhrleitung zwischen Absperrventil 38 und Verbrennungsmotor 33 ist entleert.

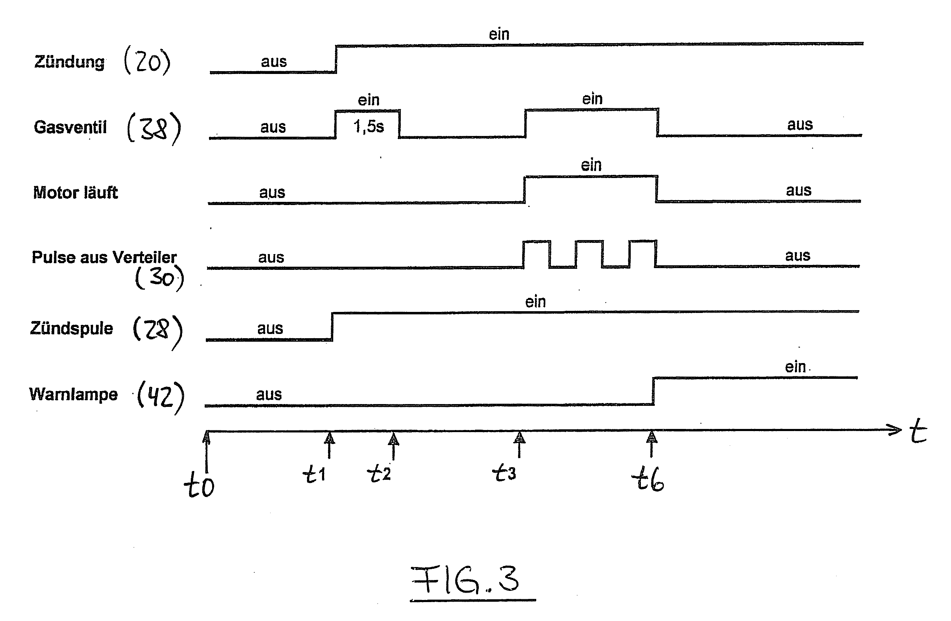

Fig. 3 zeigt ein Ablaufdiagramm des Betriebs des Flurförderzeugs, bei dem ein irregulärer Betriebszustand auftritt aufgrund eines irregulären Motorstillstands. Die Zeitpunkte t0 bis t3 sind analog zum Ablaufdiagramm der Fig. 2 und werden nicht weiter beschrieben. Im Gegensatz zum regulären Unterbrechen des Motorbetriebs gemäß Fig. 2 wird im Ablaufdiagramm der Fig. 3 zum Zeitpunkt t6 der Motor irregulär zum Stillstand gebracht, beispielsweise durch Überlastung abgewürgt oder dgl. Sobald der Motor abgewürgt worden ist, gibt der mechanisch mit dem Motor gekoppelte Zündverteiler 30 keine elektrischen Pulse mehr an die Steuereinrichtung 10 ab. Daraufhin schließt die Steuereinrichtung 10 das Absperrventil 38, wobei die Zündspule 28 und der Zündverteiler 30 weiter mit Strom versorgt werden; diese Stromversorgung kann aber auch unterbrochen werden, was im Diagramm nicht dargestellt ist. Die Steuereinrichtung ist dabei derart eingerichtet, dass sie erkennt, dass ein Motorstillstand eingetreten ist, obwohl der Ein-/Ausschalter 20 sich nach wie vor in der Einschaltstellung befindet. Das Erkennen des Motorstillstands hängt dabei von den fehlenden elektrischen Pulsen des Zündverteilers 30 ab. Die Steuereinrichtung aktiviert in einem solchen irregulären Betriebszustand die Warneinrichtung 42, da sich in der Zufuhrleitung immer noch Gas befindet, weil das Absperrventil 38 beim irregulären Stillstand des Motors ebenfalls geschlossen worden ist. Die Warneinrichtung 42 signalisiert einer Bedienperson optisch oder/und akustisch, dass ein irregulärer Betriebszustand aufgrund eines irregulären Motorstillstands aufgetreten ist. Die Bedienperson ist dann gefordert, den Ein-/Ausschalter 20 in die Ausschaltstellung zu bringen und erneut einzuschalten und den Motor wieder zu starten, um die Warneinrichtung zu deaktivieren. Sofern das Flurförderzeug in Betrieb gehalten wird, bleibt die Warneinrichtung 42 deaktiviert und wird erst wieder aktiviert, wenn ein irregulärer Betriebszustand gemäß Zeitpunkt t6 der Fig. 3 eintritt. Zur Deaktivierung der Warneinrichtung ist es somit nicht erforderlich, den Motorbetrieb kurzzeitig wieder aufzunehmen und dann gleich regulär zu unterbrechen gemäß Ablaufdiagramm Fig. 2, sondern es reicht aus, den regulären Motorbetrieb wieder aufzunehmen, da im regulären Motorbetrieb das Gas kontinuierlich vom Gastank zum Verbrennungsmotor strömt und dort verbraucht wird.

## Patentansprüche

1. Gasbetriebenes Fahrzeug, umfassend
- einen Gasverbrennungsmotor (33), welcher über eine Zufuhrleitung (31) mit einem am Fahrzeug mitgeführten Gastank (35) verbunden ist,
- eine Steuereinrichtung (10) mit einem Ein-/Ausschalter (20) zum regulären Ein- bzw. Ausschalten des Betriebs des Verbrennungsmotors (33), wobei die Steuereinrichtung (10) dazu eingerichtet ist, den Motorbetrieb zu überwachen,
- ein in der Zufuhrleitung (31) vorgesehenes, mittels der Steuereinrichtung (10) steuerbares Absperrventil (38) zur bedarfsweisen Unterbrechung der Gaszufuhr vom Gastank (35) zum Verbrennungsmotor (33),
wobei die Steuereinrichtung (10) ferner dazu eingerichtet ist, das Absperrventil (38) in den Schließzustand übergehen zu lassen (t4) und den Motorbetrieb aufrechtzuerhalten bis zum regulären Motorstillstand aufgrund von Gasmangel (t5), wenn der Ein-/Ausschalter (20) bei laufendem Verbrennungsmotor in die Ausschaltstellung (t4) geschaltet wird,
**dadurch gekennzeichnet, dass** die Steuereinrichtung (10) auch dazu eingerichtet ist, das Absperrventil (38) in den Schließzustand übergehen zu lassen (t6), wenn ein irregulärer Motorstillstand bei in Einschaltstellung (t6) befindlichem Ein-/Ausschalter (20) auftritt, eine am Fahrzeug angeordnete Warneinrichtung (42) zur Signalisierung eines irregulären Betriebszustands zu aktivieren, wenn ein irregulärer Motorstillstand bei in Einschaltstellung (t6) befindl chem Ein-/Ausschalter (20) auftritt, und die Warneinrichtung (42) zu deaktivieren nach Wiederaufnahme des Motorbetriebs durch erneutes Öffnen des Absperrventils (38) und durch Bestromen der Zündeinrichtung (28, 30), wenn nach dem Bewegen des Ein-/Ausschalters (20) von der Einschaltstellung in die Ausschaltstellung die Schritte des Einschaltens (t1) und des Überwachens des Motorbetriebs (t3 - t5) erneut durchgeführt werden.

2. Fahrzeug nach Anspruch 1, **gekennzeichnet durch** eine Zündeinrichtung mit einem mit dem Verbrennungsmotor (33) verbundenen Zündverteiler (30) und einer Zündspule (28), wobei die Zündeinrichtung dafür eingerichtet ist, vom Zündverteiler (30) stammende elektrische Pulse an die Steuereinrichtung (10) abzugeben.

3. Fahrzeug nach Anspruch 2, **dadurch gekennzeichnet, dass** die Steuereinrichtung (10) dazu eingerichtet ist, das Vorliegen von elektrischen Pulsen zu überwachen und ein Ausbleiben von wenigstens einem elektrischen Puls, vorzugsweise von mehreren aufeinanderfolgenden Pulsen, als Motorstillstand zu erkennen.

4. Fahrzeug nach Anspruch 2 oder 3, **dadurch gekennzeichnet, dass** die Steuereinrichtung (10) dazu eingerichtet ist, die Zündeinrichtung beim regulären Unterbrechen (t4) des Motorbetriebs solange mit Strom zu versorgen bis der reguläre Motorstillstand aufgrund von Gasmangel eintritt (t5).

5. Fahrzeug nach einem der Ansprüche 2 bis 4, **dadurch gekennzeichnet, dass** die Steuereinrichtung (10) dazu eingerichtet ist, die Zündeinrichtung beim irregulären Motorstillstand stromlos zu schalten.

6. Fahrzeug nach einem der vorhergehenden Ansprüche, **dadurch gekennzeichnet, dass** die Warneinrichtung (42) derart ausgebildet ist, dass sie im aktivierten Zustand optische oder/und akustische Signale abgibt.

7. Verfahren zur Steuerung des Motorbetriebs eines Gasverbrennungsmotors eines Fahrzeugs, umfassend die Schritte:
- Einschalten des Motorbetriebs durch Schalten eines Ein-/Ausschalters (20) einer Steuereinrichtung (10) in eine Einschaltstellung (t1), wobei durch die Steuereinrichtung (10) das Öffnen eines Absperrventils (38) in einer Zufuhrleitung (31), die sich von einem mitgeführten Gastank (35) zum Verbrennungsmotor (33) erstreckt, und das Bestromen einer Zündeinrichtung (28, 30) veranlasst wird,
- Überwachen des Motorbetriebs durch die Steuereinrichtung (10), und
- Schließen des Absperrventils (38), wenn der Motorbetrieb irregulär unterbrochen (t6) wird bei in Einschaltstellung befindlichem Ein-/Ausschalter (20),
wobei das Verfahren **gekennzeichnet ist durch** die Schritte:
- Aktivieren einer optischen oder/und akustischen Warneinrichtung (42), wenn der Motorbetrieb irregulär unterbrochen (t6) wird bei in Einschaltstellung befindlichem Ein-/Ausschalter (20), und
- Deaktivieren der Warneinrichtung (42) nach Wiederaufnahme des Motorbetriebs **durch** erneutes Öffnen des Absperrventils (38) und **durch** Bestromen der Zündeinrichtung (28, 30), wobei zuerst der Ein-/Ausschalter (20) von der Einschaltstellung in die Ausschaltstellung bewegt wird und danach die Schritte des Einschaltens (t1) und des Überwachens des Motorbetriebs (t3 - t5) erneut durchgeführt werden.

8. Verfahren nach Anspruch 7, wobei ferner die Stromversorgung der Zündeinrichtung unterbrochen wird, wenn der Motorbetrieb irregulär unterbrochen wird bei in Einschaltstellung befindlichem Ein-/Ausschalter.

## Claims

1. Gas-operated vehicle, comprising:
- a gas combustion engine (33) coupled to a gas tank (35) carried at a vehicle via a supply line (31),
- a control device (10) with an on/off switch (20) for regularly switching the combustion engine (33) on or off, said control device (10) being adapted for monitoring the engine operation,
- a shut-off valve (38) provided in said supply line (31) which can be controlled by said control device (10) for optionally interrupting the gas supply from the gas tank (35) to the combustion engine (33),
said control device (10) being furthermore adapted for bringing the shut-off valve (38) into the closed position (t4) and for maintaining the engine operation until the regular standstill due to a gas shortage (t5), when the on/off switch (20) is switched to the closed position (t4) during operation of the combustion engine,
**characterized by** said control device (10) being also adapted for bringing the shut-off valve (38) into the closed position (t6) when an irregular engine standstill occurs with the on/off switch (20) in the switch-on position (t6), for activating a warning device (42) arranged at the vehicle for signaling an irregular operation status when an irregular engine standstill occurs with the on/off switch (20) in the switch-on position (t6) and for deactivating the warning device (42) after resuming the engine operation by again opening the shut-off valve (38) and by energizing the ignition device (28, 30) when after moving the on/off switch (20) from the switch-on position to the switch-off position the steps of switching on (t1) and monitoring the engine operation (t3 - t5) have been carried out once again.

2. Vehicle according to claim 1, **characterized by** an ignition device with an ignition distributor (30) connected to the combustion engine (33) and with an ignition coil (28), said ignition device being adapted for transmitting electrical pulses originating from said ignition distributor (30) to the control device (10).

3. Vehicle according to claim 2, **characterized by** said control device (10) being adapted for monitoring the presence of electrical pulses and for recognizing the absence of at least one electrical pulse, preferably of several succeeding pulses as an engine standstill.

4. Vehicle according to claim 2 or 3, **characterized by** said control device (10) being adapted for energizing the ignition device during a regular interruption of engine operation until the regular engine standstill occurs due to a lack of gas (t5).

5. Vehicle according to one of claims 2 to 4, **characterized by** the control device (10) being adapted for disconnecting the ignition device from the power supply during an irregular engine standstill.

6. Vehicle according to one of the preceding claims, **characterized by** said warning device (42) being adapted for emitting optical or/and acoustic signals in its activated condition.

7. Method for controlling the engine operation of a gas combustion engine of a vehicle, comprising the following steps:
- switching on the engine operation by switching an on/off switch (20) of a control device (10) to a switch-on position (t1), said control device (10) causing the opening of a shut-off valve (38) in a supply line (31) which extends from a gas tank (35) carried at the vehicle to the combustion engine (33) and causing an energy supply to an ignition device (28, 30),
- monitoring of the engine operation by said control device (10), and
- closing the shut-off valve (38) when the engine operation is interrupted irregularly (t6) with the on/off switch (20) being in the switch-on position, the method being **characterized by** the following steps:
- activating an optical or/and acoustic warning device (42) when the engine operation is interrupted irregularly (t6) with the on/off switch (20) being in the switch-on position, and
- deactivating the warning device (42) after resuming the engine operation by again opening the shut-off valve (38) and by energizing the ignition device (28, 30) when after moving the on/off switch (20) from the switch-on position to the switch-off position the steps of switching on (t1) and monitoring the engine operation (t3 - t5) have been carried out once again.

8. Method according to claim 7, said energy supply to the ignition device being interrupted when the engine operation has been interrupted irregularly with the on/off switch being in the switch-on position.

## Revendications

1. Un véhicule opéré au gaz, comprenant:
un moteur à combustion de gaz (33) accouplé à un réservoir de gaz (35) à bord du véhicule via un conduit d'alimentation (31),
- un dispositif de contrôle (10) avec un commutateur marche/arrêt (20) pour l'activation ou l'arrêt régulier de l'opération du moteur à combustion (33), ledit dispositif de contrôle (10) étant adapté pour surveiller l'opération du moteur,
- une vanne d'arrêt (38) prévue dans le conduit d'alimentation (31) et contrôlable par le dispositif de contrôle (10) pour en cas de besoin pouvoir interrompre la fourniture de gaz du réservoir de gaz (38) au moteur de combustion (33),
le dispositif de contrôle (10) étant en outre adapté pour faire passer la vanne d'arrêt (38) dans la position d'arrêt (t4) et pour maintenir l'opération du moteur jusqu'à l'arrêt régulier du moteur pour cause de manque de gaz (t5) lorsque le commutateur marche/arrêt (20) est commuté en position d'arrêt (t4) avec le moteur de combustion en opération,
**caractérisé par** le dispositif de contrôle (10) étant également adapté pour faire passer la vanne d'arrêt (38) dans la position d'arrêt (t6) lorsqu'un arrêt irrégulier du moteur survient avec le commutateur marche/arrêt (20) en position de marche (t6), pour activer un dispositif d'alerte (42) arrangé au véhicule pour signaler un état de marche irrégulier, lorsqu'un arrêt irrégulier du moteur survient avec le commutateur marche/arrêt (20) en position de marche (t6), et pour désactiver le dispositif d'alerte (42) lors de la reprise de l'opération du moteur en ouvrant de nouveau la vanne d'arrêt (38) et en alimentant le dispositif d'allumage (28, 30) lorsque après le passage du commutateur marche/arrêt (20) de la position de marche à la position d'arrêt les étapes de la mise en marche (t1) et de la surveillance de l'opération du moteur (t3-t5) sont répétées.

2. Véhicule selon la revendication 1, **caractérisé par** un dispositif d'allumage avec un distributeur d'allumage (30) connecté au moteur de combustion (33) et une bobine d'allumage (28), le dispositif d'allumage étant adapté pour émettre des impulsions électriques provenant du distributeur d'allumage (30) au dispositif de contrôle (10).

3. Véhicule selon la revendication 2, **caractérisé par** le dispositif de contrôle (10) étant adapté pour surveiller la présence d'impulsions électriques et pour reconnaître l'absence d'au moins une impulsion électrique, de préférence de plusieurs impulsions consécutives en tant qu'arrêt de moteur.

4. Véhicule selon la revendication 2 ou 3, **caractérisé par** le dispositif de contrôle (10) étant adapté pour alimenter le dispositif d'allumage lors de l'interruption régulière du moteur (t4) jusqu'à l'arrêt régulier du moteur causé par une manque de gaz (t5).

5. Véhicule selon la revendication 2 à 4, **caractérisé par** le dispositif de contrôle (10) étant adapté pour couper l'alimentation électrique du dispositif d'allumage lors de l'arrêt irrégulier du moteur.

6. Véhicule selon une des revendications précédentes **caractérisé par** le dispositif d'alerte (42) étant adapté pour émettre des signaux optiques ou/et acoustiques dans son état activé.

7. Méthode pour contrôler l'opération d'un moteur à combustion de gaz d'un véhicule, comprenant les étapes suivantes :
- Mettre en marche l'opération d'un moteur en mettant un commutateur marche/arrêt (20) d'un dispositif de contrôle (10) dans une position de marche (t1), le dispositif de contrôle (10) initiant l'ouverture d'une vanne d'arrêt (38) dans un conduit d'alimentation (31) qui mène du réservoir de gaz (35) à bord du véhicule au moteur de combustion (33) et initiant l'alimentation électrique d'un dispositif d'allumage (28, 30),
- surveiller l'opération du moteur par le dispositif de contrôle (10), et
- fermer la vanne d'arrêt (38) lors d'une interruption irrégulière de l'opération du moteur (t6) avec le commutateur marche/arrêt (20) dans sa position de marche,
la méthode étant **caractérisée par** les étapes suivantes :
- activer un dispositif d'alerte optique ou/et acoustique (42) lors d'une interruption irrégulière de l'opération du moteur (t6) avec le commutateur marche/arrêt (20) dans sa position de marche, et
- désactiver le dispositif d'alerte (42) après la reprise de l'opération du moteur en ouvrant de nouveau la vanne d'arrêt (38) et en alimentant le dispositif d'allumage (28, 30), le commutateur marche/arrêt (20) étant d'abord déplacé de la position de marche à la position d'arrêt et les étapes de la mise en marche (t1) et de la surveillance de l'opération du moteur (t3-t5) étant effectuées de nouveau.

8. Méthode selon la revendication 7, l'alimentation du dispositif d'allumage étant en outre interrompue lors d'une interruption irrégulière de l'opération du moteur avec le commutateur marche/arrêt dans sa position de marche.
